# FASCICULE DE BREVET EUROPEEN

(11) **EP 2 934 884 B1**
(45) Date de publication et mention de la délivrance du brevet: **15.02.2017**
(21) Numéro de dépôt: 13818319.9
(22) Date de dépôt: 17.12.2013
(51) Int. Cl.: B32B 17/10, G02B 27/01

(54) **VITRAGE FEUILLETÉ COMPRENANT DES LUMINOPHORES**
VERBUNDGLAS ENTHALTEND LEUCHTSTOFFE
GLAZING LAMINATE CONTAINING LUMINOPHORES

(30) Priorité: 24.12.2012 FR 1262744
(43) Date de publication de la demande: 28.10.2015
(73) Titulaire: Saint-Gobain Glass France, 92400 Courbevoie (FR)
(72) Inventeur: CLABAU, Frédéric, 75005 Paris (FR); CHILINGUIRIAN, Harayer, F-93170 Bagnolet (FR)
(74) Mandataire: Saint-Gobain Recherche
(86) Numéro de dépôt international: PCT/FR2013/053109
(87) Numéro de publication internationale: WO 2014/102482

(56) Documents cités:
- WO-A1-2010/139889
- WO-A2-02/058402
- US-A1- 2008 018 641
- US-A1- 2012 188 652

## Description

L'invention est relative à un vitrage feuilleté comprenant au moins deux substrats en verre et de la matière plastique prise en feuilleté entre les substrats verriers, le vitrage comportant des luminophores qui lorsqu'ils sont excités par un éclairage de longueur d'onde adaptée, en particulier du type rayonnement UV, engendrent une ou des images visualisables sur le vitrage.

Il est connu dans le domaine de l'automobile ou l'aéronautique d'intégrer des luminophores dans un vitrage feuilleté, tel qu'un pare-brise, fournissant des systèmes de visualisation dits tête haute, encore dénommés HUD ou Head Up Display en anglais, pour engendrer des informations visualisables par le conducteur lorsque les luminophores sont excités. L'image réelle formée sur le vitrage est perçue par le conducteur sous forme d'une image plane à deux dimensions.

Cette technique utilisant des luminophores pourrait être appliquée au domaine du bâtiment pour fournir un panneau esthétique transparent sur lequel on souhaiterait visualiser par exemple une enseigne, un logo.

Cependant, l'image produite serait plane à deux dimensions, sans relief. Or, pour ce type d'application, il serait souhaitable de visualiser des motifs ou informations à trois dimensions avec un effet de perspective, renforçant l'effet de profondeur de l'image ou écriture visualisée.

L'invention a pour but de proposer un vitrage feuilleté avec luminophores destinés sous excitation lumineuse à produire une image en relief.

L'invention concerne plus particulièrement le domaine du bâtiment pour lequel le vitrage constitue un objet décoratif et/ou fonctionnel, le vitrage étant transparent hormis lorsqu'il est éclairé sous une longueur d'onde correspondant à l'excitation des luminophores de sorte à visualiser sur ledit vitrage des décors et/ou informations avec effet de perspective.

Le domaine du bâtiment s'entend par toutes applications liées à des constructions de bâtiments privés ou industriels, en intérieur ou extérieur, ou encore liées à des habitacles de bateaux ou d'avions, des habitacles de véhicules automobiles, ferroviaires, etc...

De nombreuses applications peuvent être envisagées et de manière non exhaustive, on peut citer l'utilisation du vitrage de l'invention en tant qu'élément de cloison, fenêtre, vitrine, dalle de sol ou murale ou encore de plafond, de porte vitrée, marche d'escalier, garde-corps, balustrade, comptoir, etc...

Les éléments visualisables peuvent être des décors et/ou toutes sortes de motifs, signes ou informations écrites, d'indication, de décoration, publicitaires, etc....

Selon l'invention, le vitrage comportant des feuilles de verre et de la matière plastique prise en feuilleté entre les feuilles de verre, ainsi que des luminophores, est caractérisé en ce qu'il comporte au moins trois feuilles de verre et au moins deux films de matière plastique intercalés en alternance entre les feuilles de verre.

On rappelle que l'art antérieur concerne les pare-brises de véhicules automobiles pour lesquels les vitrages utilisés ne présentent que deux feuilles de verre, l'éclairage des luminophores ne procurant aucun effet particulier.

Or, de manière inattendue, le demandeur a mis en évidence, que dans un vitrage feuilleté incorporant des luminophores, une sélection d'au moins trois feuilles de verre associées à au moins deux films de matière plastique intercalés, permet d'obtenir une image en trois dimensions.

L'effet ainsi produit est surprenant.

L'invention présente donc l'avantage d'apporter un effet de relief à l'image visualisée, engendrant de nombreuses applications dans le domaine du bâtiment.

On peut notamment utiliser des luminophores fournissant des couleurs différentes, procurant par exemple un décor selon une ou plusieurs couleurs, placé en premier plan sur un fond uni d'une autre couleur.

On peut également utiliser des luminophores procurant une même couleur à l'égard de deux motifs au graphisme distinct placés l'un sur l'autre, l'invention permettant de distinguer les motifs du fait que les luminophores sont disposés selon deux profondeurs de champ distincts.

En outre, le vitrage de l'invention permet de séparer des luminophores car associés à des substrats distincts (verre ou plastique). Ceci a tout d'abord l'avantage de pouvoir exciter de manière séparée les luminophores situés dans les plans distincts, et ainsi produire par exemple des images qui évoluent dans le temps par un éclairage séquentiel des motifs.

Cet agencement des luminophores dans des plans successifs présente également l'avantage de pouvoir séparer des luminophores qui, s'ils étaient au contraire dans un même plan, risqueraient d'interagir de manière négative, l'un dégradant l'autre par une réaction chimique par exemple.

Les luminophores sont introduits à l'intérieur du vitrage sur ou dans au moins l'un des films de matière plastique et/ou sur au moins l'une des feuilles de verre.

Les luminophores sont répartis sur toute la surface du film en matière plastique ou feuille de verre auquel ils sont associés, et/ou par zones pour délimiter des motifs. On entend par motifs toutes représentations graphiques, telles que sous forme de dessin, écritures, logos, etc...

Les luminophores peuvent être de différents types, aptes à émettre dans des couleurs différentes.

Les luminophores peuvent être des luminophores organiques ou inorganiques.

Avantageusement, les luminophores sont excitables sous un éclairage de rayonnement visible (longueur d'onde supérieure à 400 nm) ou UV, de préférence proche du visible pour économiser l'énergie et améliorer la sécurité du système.

Les luminophores sont déposés, sans se limiter aux méthodes suivantes de dépôt, par exemple par sérigraphie, rouleau, enduction laminaire ou spray, ou bien insérés dans la matière plastique lors de l'extrusion.

Les films de matière plastique peuvent être monocouche ou multicouches.

Les films de matière plastique sont par exemple en polyvinylbutyral (PVB), polychlorure de vinyle (PVC), polyéthylène téréphtalate (PET), éthylène-acétate de vinyle (EVA), polyuréthane (PU),

Selon une caractéristique, les feuilles de verre peuvent présenter des épaisseurs différentes, en particulier la ou les feuilles de verre internes situées à l'intérieur du système sont plus épaisses que les feuilles de verre externe. Cette configuration renforce encore l'effet de profondeur et met davantage en exergue l'effet de relief des motifs de premier plan.

Dans un mode de réalisation, au moins une feuille de verre comporte une couche réflectrice ou bas-indice. L'éclairage d'excitation est amené par la tranche du vitrage et est focalisé dans une feuille plastique particulière, notamment grâce à des couches réflectrices ou bas-indice agencées sur le verre de part et d'autre de ladite feuille plastique. Ainsi, on pourra fournir un éclairage en regard d'un plan spécifique contenant des luminophores pour faire apparaitre ce plan à l'observateur, puis éteindre pour exciter un autre plan, etc...

L'invention est également relative à un ensemble comportant un vitrage ci-dessus décrit et un dispositif d'éclairage apte à exciter les luminophores, caractérisé en ce que l'éclairage est agencé en regard d'une face générale du vitrage et/ou en regard de la tranche d'au moins une des feuilles de verre et/ou d'un film plastique.

Le dispositif d'éclairage possède un rayonnement dans le visible, ou dans l'UV de préférence proche du visible.

Le dispositif d'éclairage peut comprendre plusieurs systèmes d'éclairage afin de coopérer avec le vitrage selon différentes directions d'éclairage.

Un système d'éclairage associé à la tranche d'un des éléments en verre ou plastique du vitrage est de préférence formé de diodes électroluminescentes.

Le qualificatif « externe » s'entend dans la suite de la description comme respectivement, étant en regard de l'environnement extérieur à l'élément auquel il se rapporte.

Le qualificatif « interne » est relatif à une partie tournée vers l'intérieur de l'élément auquel il se rapporte.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique partielle en coupe et de côté d'un vitrage de l'invention incorporant des luminophores ;
- La figure 2 est une vue de face d'un vitrage selon l'invention pour lequel les luminophores ne sont pas excités ;
- La figure 3 représente la vue de la figure 2, les luminophores étant excités par un rayonnement approprié engendrant la visualisation d'images en relief ;
- La figure 4 illustre un autre exemple de réalisation d'un vitrage de l'invention.

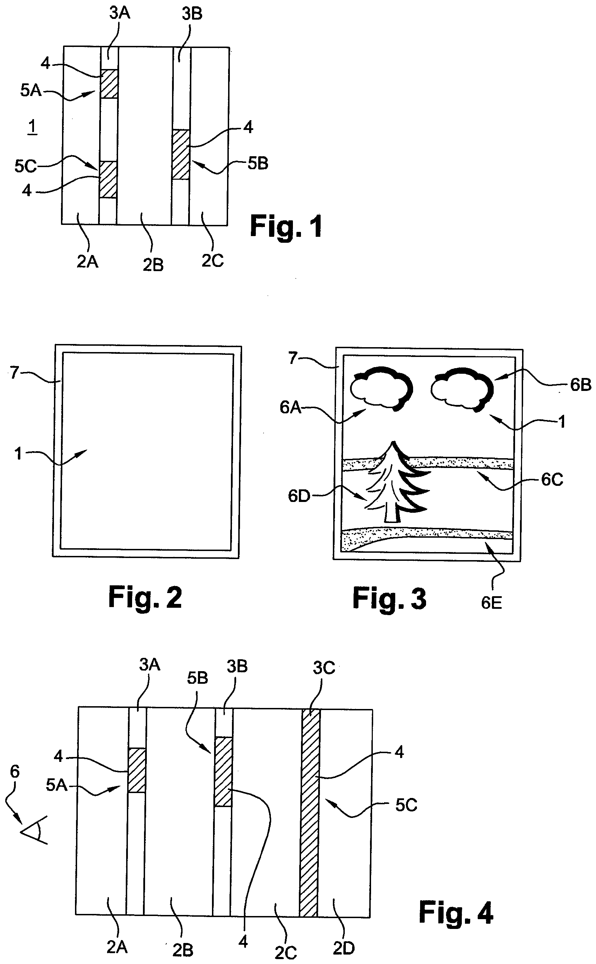

Le vitrage illustré sur les figures 1 à 3 est selon l'invention un vitrage feuilleté intégrant des luminophores, et est plus particulièrement utilisé dans le bâtiment sans toutefois être limité à ce domaine d'application.

La configuration structurelle du vitrage de l'invention combinée aux luminophores fournit soit un vitrage transparent tel que visible sur la figure 2 lorsque les luminophores ne sont pas excités, soit un vitrage sur lequel est visualisée une image en relief tel qu'illustré sur la figure 3, lorsque les luminophores sont excités par un éclairage approprié pour les rendre luminescents (émetteurs de lumière) dans la gamme de longueurs d'ondes du visible.

La figure 1 illustre selon une vue en coupe et de côté une portion verticale du vitrage feuilleté 1 incorporant des luminophores.

Le vitrage 1 comporte au moins trois feuilles de verre ou substrats verriers 2A, 2B et 2C, et au moins deux films en matière plastique 3A et 3B, chaque film plastique étant intercalé avec un substrat verrier en lui étant solidaire.

Deux substrats verriers 2A et 2C sont disposés en tant qu'éléments externes du vitrage, tandis que le troisième substrat verrier 2B est agencé entre les deux substrats externes et rendus solidaires de ceux-ci par les deux films respectifs de matière plastique 3A et 3B.

Selon l'invention, le vitrage peut comprendre davantage de substrats verriers. Soit n, le nombre de substrats verriers, le vitrage comprend alors (n-1) films de matière plastique, chaque feuille de matière plastique étant prise en sandwich entre deux substrats verriers, les éléments externes du vitrage étant de préférence constitués de deux substrats verriers.

La figure 4 illustre un autre exemple de réalisation pour lequel le vitrage comporte quatre feuilles de verre 2A à 2D séparés par trois films de matière plastique 3A à 3C.

Chaque film de matière plastique peut être monocouche ou multicouches en étant composé d'une superposition de plusieurs feuilles de matière plastique.

Chaque film peut être totalement transparent ou bien totalement ou partiellement coloré.

La matière plastique est choisie parmi par exemple les matières suivantes : polyvinylbutyral (PVB), polychlorure de vinyle (PVC), polyuréthane (PU), éthylène-acétate de vinyle (EVA), ou encore polyéthylène téréphtalate (PET). Ces matières peuvent être assemblées entre elles pour former un film multicouches.

Le vitrage comporte des luminophores 4 qui sont répartis surfaciquement selon une pluralité de zones 5A, 5B, 5C dont le périmètre de chacune correspond à un motif représentant une image, une écriture, ou toute autre représentation graphique. La figure 3 illustre schématiquement les images en relief 6A à 6E) engendrées par une répartition idoine des luminophores à l'intérieur du vitrage et au niveau de différents plans (verre ou film plastique) et par l'éclairage d'excitation des luminophores.

Les luminophores sont agencés sur l'un au moins des films, sur chaque film ou sur certains d'entre eux seulement.

Les luminophores peuvent être répartis selon la globalité 5C de la surface d'un film tel qu'illustré sur la figure 4. Ce film est par exemple le film 3C le plus éloigné d'un observateur 6 qui regarderait le vitrage face au premier substrat externe 2A. Les luminophores 4 excités fournissent alors un fond coloré sur l'ensemble de la surface 5C.

Les luminophores 4 sont introduits à l'intérieur du vitrage, sur ou dans les films en matière plastique ou sur les substrats verriers. Leur dépôt sur un film plastique ou sur un substrat verrier est effectué par toutes méthodes connues, du type par sérigraphie, rouleau, enduction laminaire ou spray, ou encore par extrusion lors de la fabrication des films.

Les luminophores peuvent être organiques, par exemple des dérivés de naphtalimide, de benzoxazole de benzothiazole ou de benzoxazinone, ou des complexes de terres rares, ou inorganiques, généralement des oxydes dopés par des terres rares.

Est associé au vitrage un dispositif d'éclairage 7 (figures 2 et 3), tel qu'un cadre associé au chant du vitrage et comprenant un ou plusieurs systèmes d'éclairage, par exemple des diodes électroluminescentes (DEL). L'éclairage permet d'exciter les luminophores de façon qu'ils émettent à leur tour de la lumière dans le domaine du visible.

L'éclairage peut également se faire en combinaison ou en alternative de la tranche du vitrage, en regard de l'une des faces du vitrage.

L'excitation des luminophores pour obtenir la luminescence est obtenue sous un rayonnement de longueur d'onde située dans le visible, ou dans l'ultraviolet (UV) de préférence proche du visible, entre 365 et 405 nm, afin de limiter les besoins en énergie et réduire les problèmes de sécurité.

Les luminophores peuvent posséder des longueurs d'ondes d'émission différentes, ce qui génère des représentations graphiques de différentes couleurs. On peut par exemple réaliser un arrière plan uni d'une certaine couleur sur lequel viennent se positionner des motifs spécifiques et de couleurs différentes en premier plan.

Par ailleurs, il peut être envisagé d'ajouter des couches réflectrices ou bas-indice sur certaines feuilles de verre ; et d'agencer des éclairages focalisés sur chacun des éléments porteurs des luminophores, de façon à faire apparaître selon la profondeur du vitrage des plans luminescents, indépendamment les uns des autres en n'éclairant que l'élément support (film ou verre) pour lequel on souhaite que les luminophores émettent. Ainsi, les couches réflectrices ou bas-indice jouent un rôle barrière pour les luminophores situés dans les éléments supports adjacents et qui ne peuvent être excités.

L'épaisseur des substrats verriers est adaptée en fonction de l'effet de perspective voulu.

L'épaisseur des substrats verriers est également adaptée à l'utilisation/l'intégration du vitrage dans son environnement.

On fournit l'image voulue (figure 3) en réalisant une répartition idoine des luminophores sur la surface à laquelle ils sont associés. En outre, en choisissant l'élément du vitrage sur lequel ils sont agencés, c'est-à-dire en sélectionnant la profondeur à laquelle les luminophores sont disposés par rapport à la face depuis laquelle on observe le vitrage, tout en adaptant les épaisseurs des substrats verriers, on engendre différents plans dans la globalité de l'image créée. Ainsi, peut-on réaliser un arrière plan à fond coloré sur lequel se trouve en plan central un motif combiné à un autre motif de premier plan.

Un exemple de vitrage selon l'invention présente l'empilement suivant : verre / PVB / verre / PVB / verre, avec une épaisseur du verre interne de 6mm tandis que l'épaisseur des substrats verriers externes est de 2mm. Le PVB est pris dans le commerce.

Les motifs luminescents sont obtenus par pulvérisation à travers des masques sur les faces internes des substrats verriers externes, de luminophores organiques du commerce dissous dans du solvant de type tétrahydrofurane (THF).

Des luminophores du commerce sont par exemple référencés sous :
- Tinopal OB® de BASF pour la couleur bleue,
- Lumilux CD797® de Honeywell pour la couleur verte,
- Lumilux CD332® de Honeywell pour la couleur rouge.

Après avoir empilé les verres et le plastique, le feuilletage de l'empilement a été effectué par mise sous vide dans une poche hermétique puis passage en autoclave à 140°C/10bar pendant 2h.

Le dispositif d'éclairage est constitué de DEL émettant à 405 nm. Les DEL sont agencées sur des supports qui ont été montés par exemple par clipsage après le chant du vitrage.

## Revendications

1. Vitrage (1) comportant des feuilles de verre et de la matière plastique prise en feuilleté entre les feuilles de verre, ainsi que des luminophores (4), **caractérisé en ce qu'**il comporte au moins trois feuilles de verre (2A, 2B, 2C) et au moins deux films de matière plastique (3A, 3B) intercalés en alternance entre les feuilles de verre.

2. Vitrage selon la revendication 1, **caractérisé en ce que** les luminophores sont introduits à l'intérieur du vitrage sur ou dans au moins l'un des films de matière plastique et/ou sur au moins l'une des feuilles de verre.

3. Vitrage selon la revendication 1 ou 2, **caractérisé en ce que** les luminophores sont répartis sur toute la surface du film en matière plastique ou feuille de verre auquel ils sont associés, et/ou par zones pour délimiter des motifs.

4. Vitrage selon l'une quelconque des revendications précédentes, **caractérisé en ce que** les luminophores sont de différents types, aptes à émettre dans des couleurs différentes.

5. Vitrage selon l'une quelconque des revendications précédentes, **caractérisé en ce que** les luminophores sont des luminophores organiques ou inorganiques.

6. Vitrage selon l'une quelconque des revendications précédentes, **caractérisé en ce que** les luminophores sont excitables sous un éclairage de rayonnement visible, ou UV de préférence proche du visible.

7. Vitrage selon l'une quelconque des revendications précédentes, **caractérisé en ce que** les feuilles de verre ont des épaisseurs différentes, en particulier, la ou les feuilles de verre internes sont plus épaisses que les feuilles de verre externes.

8. Vitrage selon l'une quelconque des revendications précédentes, **caractérisé en ce qu'**au moins une feuille de verre comporte une couche réflectrice ou bas-indice.

9. Ensemble comportant un vitrage selon l'une quelconque des revendications précédentes et un dispositif d'éclairage (7) apte à exciter les luminophores, **caractérisé en ce que** l'éclairage est agencé en regard d'une face générale du vitrage et/ou en regard de la tranche d'au moins une des feuilles de verre et/ou d'un film plastique.

10. Ensemble selon la revendication précédente, caractérisé en ce le dispositif d'éclairage possède un rayonnement dans le visible, ou dans l'UV de préférence proche du visible.

## Patentansprüche

1. Verglasung (1), die Glasscheiben und Kunststoff, das zwischen den Glasscheiben schichtartig erfasst ist, sowie Luminophore (4) aufweist, **dadurch gekennzeichnet, dass** sie ferner mindestens drei Glasscheiben (2A, 2B, 2C) und mindestens zwei Kunststofffolien (3A, 3B) aufweist, die alternierend zwischen den Glasscheiben eingelegt sind.

2. Verglasung nach Anspruch 1, **dadurch gekennzeichnet, dass** die Luminophore in das Innere der Verglasung auf oder in mindestens eine der Kunststofffolien und/oder auf mindestens eine der Glasscheiben eingebracht sind.

3. Verglasung nach Anspruch 1 oder 2, **dadurch gekennzeichnet, dass** die Luminophore über die gesamte Oberfläche der Folie aus Kunststoff oder Glasscheibe, der sie zugeordnet sind, und/oder zonenweise verteilt sind, um Muster zu begrenzen.

4. Verglasung nach einem der vorhergehenden Ansprüche, **dadurch gekennzeichnet, dass** die Luminophore unterschiedlichen Typs sind, die zum Emittieren in unterschiedlichen Farben eingerichtet sind.

5. Verglasung nach einem der vorhergehenden Ansprüche, **dadurch gekennzeichnet, dass** die Luminophore organische oder anorganische Luminophore sind.

6. Verglasung nach einem der vorhergehenden Ansprüche, **dadurch gekennzeichnet, dass** die Luminophore unter einer Beleuchtung durch sichtbare Strahlung, oder UV-Strahlung vorzugsweise nahe des sichtbaren Spektralbereichs, anregbar sind.

7. Verglasung nach einem der vorhergehenden Ansprüche, **dadurch gekennzeichnet, dass** die Glasscheiben unterschiedlicher Dicke sind, insbesondere die innen liegende(n) Glasscheibe(n) dicker sind als die außen liegenden Glasscheiben.

8. Verglasung nach einem der vorhergehenden Ansprüche, **dadurch gekennzeichnet, dass** mindestens eine Glasscheibe eine Reflektor- oder Niederindexschicht aufweist.

9. Anordnung mit einer Verglasung nach einem der vorhergehenden Ansprüche und einer Beleuchtungsvorrichtung (7), die zum Anregen der Luminophore eingerichtet ist, **dadurch gekennzeichnet, dass** die Beleuchtung einer allgemeinen Fläche der Verglasung zugewandt und/oder der Kante mindestens einer der Glasscheiben und/oder einer Kunststofffolie zugewandt angeordnet ist.

10. Anordnung nach dem vorhergehenden Anspruch, **dadurch gekennzeichnet, dass** die Beleuchtungsvorrichtung eine Strahlung im Spektralbereich, oder im UV-Spektralbereich nahe des sichtbaren Spektralbereichs, aufweist.

## Claims

1. A glazing unit (1) comprising sheets of glass and of plastic laminated between the glass sheets, and luminophores (4), **characterized in that** it comprises at least three glass sheets (2A, 2B, 2C) and at least two plastic films (3A, 3B) inserted in alternation between the glass sheets.

2. The glazing unit as claimed in claim 1, **characterized in that** the luminophores are introduced into the interior of the glazing unit on or in at least one of the plastic films and/or on at least one of the glass sheets.

3. The glazing unit as claimed in claim 1 or 2, **characterized in that** the luminophores are distributed over all the area of the plastic film or glass sheet with which they are associated, and/or zonally in order to delimit patterns.

4. The glazing unit as claimed in any one of the preceding claims, **characterized in that** the luminophores are of different types, able to emit in different colors.

5. The glazing unit as claimed in any one of the preceding claims, **characterized in that** the luminophores are organic or inorganic luminophores.

6. The glazing unit as claimed in any one of the preceding claims, **characterized in that** the luminophores are excitable under illumination by visible or UV radiation, preferably UV radiation near the visible.

7. The glazing unit as claimed in any one of the preceding claims, **characterized in that** the glass sheets have different thicknesses, the one or more internal glass sheets in particular being thicker than the external glass sheets.

8. The glazing unit as claimed in any one of the preceding claims, **characterized in that** at least one glass sheet comprises a low-index or reflective layer.

9. An assembly comprising a glazing unit as claimed in any one of the preceding claims and an illuminating device (7) able to excite the luminophores, **characterized in that** the illumination is arranged facing a general face of the glazing unit and/or facing the edge face of at least one of the glass sheets and/or of a plastic film.

10. The assembly as claimed in the preceding claim, **characterized in that** the illuminating device emits visible or UV radiation, and preferably UV radiation near the visible.
